# EUROPEAN PATENT APPLICATION

(11) **EP 4 703 903 A1**
(43) Date of publication of application: **04.03.2026**
(21) Application number: 24197183.7
(22) Date of filing: 29.08.2024
(51) Int. Cl.: G06F 16/332, G06F 16/9032

(54) **CONTEXT-AWARE MACHINE OPERATOR SUPPORT SYSTEM**

(71) Applicant: Siemens Aktiengesellschaft, 80333 München (DE)
(72) Inventor: Bayraktar, Ali Emir, 34476 Istanbul (TR); Carli, Tarik, 41455 Kocaeli (TR); Erman, Merve, 34887 Sancaktepe (TR); Heller, Rainer, 90542 Eckental (DE); Helvacioglu, Turgut, 34742 KADIKOY (TR); Jaremenko, Christian, 91080 Spardorf (DE)
(74) Representative: Siemens Patent Attorneys

(57) **Abstract**

The present disclosure provides a context-aware machine operator support system comprising a large language model, a first vector database for storing rated question/answer pairs, a second vector database for storing domain-specific document chunks, and a graphical user interface. The system is configured to receive context information related to a machine operator's environment, use the context information to restrict a search context and optimize a query for relevant information, retrieve information from the first and/or the second vector databases based on the optimized query, and generate, using the large language model, a response to the machine operator's query based on the retrieved information and the context information.

## Description

### Field Of Invention

This invention is related to a machine operator support system, and more particularly to a context-aware machine operator support system utilizing large language models and vector databases for providing optimized assistance.

### Background

Machine operators in industrial settings often face challenges when encountering issues or errors with the equipment they are operating. These challenges can lead to production delays, increased downtime, and potential safety risks. Traditionally, operators have relied on printed manuals, personal experience, or assistance from colleagues to troubleshoot problems and find solutions. However, this approach has several limitations. Printed manuals can be cumbersome to navigate, especially in time-sensitive situations. They may also become outdated as equipment is updated or modified. Relying on personal experience or colleagues' knowledge can be inconsistent, particularly in environments with high staff turnover or during off-hours when experienced personnel may not be available.

The increasing complexity of modern industrial machinery has further exacerbated these challenges. Operators are expected to manage sophisticated equipment with numerous parameters and potential failure points, often without extensive technical training. This complexity can lead to longer resolution times when issues arise, as operators struggle to identify the root cause of a problem and determine the appropriate corrective action.

In recent years, there has been a growing interest in leveraging digital technologies to support machine operators. These efforts aim to provide more efficient and effective ways of accessing relevant information and guidance. However, many existing solutions still fall short in delivering context-aware, personalized assistance that can adapt to the specific needs of individual operators and the unique characteristics of different machines and production environments.

As industrial processes continue to evolve and become more automated, there is an increasing need for intelligent support systems that can bridge the gap between human operators and complex machinery. Such systems should be capable of understanding the context of a given situation, accessing relevant information from various sources, and providing timely, actionable guidance to operators.

There are several technical problems that persist in the prior art related to machine operator support systems. Firstly, traditional methods of troubleshooting, such as consulting printed manuals or relying on personal experience, are often time-consuming and may lead to extended machine downtimes, which can be costly in industrial settings. Secondly, the increasing complexity of modern industrial machinery makes it challenging for operators, especially those with limited technical training or experience, to quickly identify and resolve issues. Thirdly, existing digital solutions often lack the ability to provide context-aware, personalized assistance that adapts to the specific needs of individual operators and the unique characteristics of different machines and production environments. Furthermore, there is a gap in knowledge transfer between experienced operators and newer staff, particularly during off-hours or in environments with high personnel turnover. Lastly, many current systems do not effectively integrate real-time machine data, historical information, and operator feedback to continuously improve the quality and relevance of the assistance provided. These unresolved technical problems underscore the need for an intelligent, context-aware support system that can efficiently bridge the gap between human operators and complex machinery.

### Brief Description Of The Invention

An object of the present invention is to provide a context-aware machine operator support system and method which leverages context information to restrict the search context and optimize queries and hence the system substantially reduces the time required for operators to find relevant information.

Another object of the present invention is to provide a system and a method which leads to faster problem resolution and minimizes costly machine downtime in industrial settings.

Other object of the present invention is to provide a system and a method by integration of a large language model with two specialized vector databases to provide highly relevant and personalized responses.

Other object of the present invention is to provide a system and a method to automatically retrieve and incorporate additional context information from connected automation systems to enhance adaptability to dynamic industrial environments and allowing for real-time consideration of machine status, historical data, and process information, leading to more precise and situationally aware responses thus, operators can receive tailored guidance that takes into account the current state of the machinery and production processes, significantly improving the efficiency and effectiveness of problem-solving activities.

Another object of the present invention is to provide a system and a method to accept explicit additional context information from operators and incorporate feedback on generated responses further refines its performance over time by enabling a continuous learning mechanism which ensures that the support system becomes increasingly attuned to the specific needs and challenges of the industrial environment in which it operates, providing a level of customization and improvement that static support systems cannot match.

### Brief Description Of Figures

Aspects of this disclosure will be best understood from the following description of specific embodiments when read in connection with the accompanying drawings.
**Figure 1** is an exemplary flow diagram of the invention.
**Figure 2** shows an exemplary embodiment of the present invention.
**Figure 3** shows the ranking and feedback mechanisms.

### Detailed Description Of The Invention

A context-aware machine operator system to assist machine operators in an industrial setting characterized by comprising:
a large language model;
a first vector database for storing question/answer pairs;
a second vector database storing embeddings of domain-specific or a particular machine specific documents chunks,
a graphical user interface for receiving queries from the machine operator and displaying responses and
a processor,
wherein the system is configured to
receive a query from the machine operator via the graphical user interface,
receive context information related to a machine operator's environment,
use the context information to restrict a search context and optimize a query for relevant information,
search the first vector database for similar question/answer pairs, if a similar rated question/answer pair is found, provide the answer to the machine operator via the graphical user interface,
if no similar rated question/answer pair is found, search the second vector database for relevant document chunks,
generate a response using the large language model based on the relevant document chunks, and provide the generated response to the machine operator via the graphical user interface.

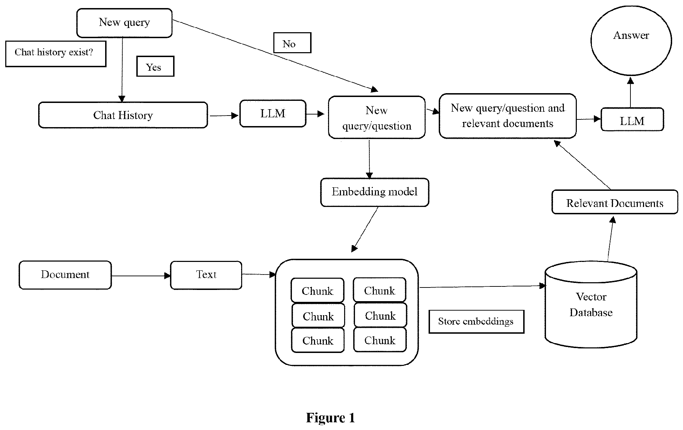

According to Figure 1, the system utilizes a multi-stage knowledge retrieval process to provide timely and relevant responses to operator queries of the machine operator. The first vector database stores the question/answer pairs which are used to provide responses to operator queries preferably that have been previously rated as effective. These rated question/answer pairs contain previously generated responses to similar queries, which have been rated by operators based on their effectiveness. The second vector database stores the document chunks which are preprocessed domain documents that are split into chunks and then converted into embeddings and stored in the second vector database. The document chunks may be specific to the domain or a particular machine, allowing the system to provide tailored responses to operator queries. The large language model (LLM) may be a standard model, such as LLama-2, and is used to generate responses to operator queries. The graphical user interface (GLTI) is used to receive queries from the machine operator and display responses. The processor executes the instructions upon the receipt of the query from the machine operator via the GLTI.

When a query from the machine operator is received, the system firstly conducts a search in the first vector database storing question/answer pairs for similar queries and provide corresponding answers. If no similar query is found, the system conducts a similarity search in the second vector database storing the domain-specific and or a particular machine specific document chunks and generates a new response using the large language model. The system receives and utilizes context information related to the machine operator's environment and uses the context information is used to restrict the search context and optimize the query, allowing to retrieve the relevant answer from the first vector database. In other words, the system conducts a simple search, i.e. a search in the first vector database to find out if the question is already paired to an answer. For example, if the operator's query is similar to a query that has been previously answered, the system retrieves the rated response to that previous query. Then, the system retrieved the answer from the first vector database the answer with highly rated before and shows the retrieved answer to the machine operator via the graphical user interface. This query is optimized using context information related to the machine operator's environment. If the answer is not found in the first vector database, then large language module is used to generate a response to the operator's query. The second vector database stores document chunks and the system conducts a similarity search in the second vector database when the answer of the query is not found in the first vector database and retrieves the most relevant answer from the second vector database and shows the related answer to the machine operator via the graphical user interface. The context information is again used to restrict the search context and optimize the operator's query for relevant information. For example, if the context information indicates that the operator is working with a specific machine, the system restricts the search context to the information related to that machine. This results in more relevant and accurate responses to the operator's query or the context information is used to refine the query, allowing the system to retrieve more relevant information from the vector databases. For example, if the context information includes an error code from a specific machine, the system uses this error code to optimize the query, allowing to retrieve information related to the error code from the vector databases. This results in more accurate and helpful responses to the operator's query. The generated response is based on the retrieved information and the context information, providing a tailored solution to the operator's query. The system's ability to use context information to optimize queries and generate responses provides a significant advantage in terms of efficiency and relevance. By considering the specific context of the operator's environment, the system can provide more accurate and relevant responses, reducing the time required to find solutions and minimizing machine downtime. The system's use of a large language model and vector databases further enhances its ability to provide effective support, allowing it to access a wide range of information and learn from past interactions.

The system may operate without requiring internet access, making it suitable for use in secure operational technology environments with limited hardware requirements. This feature may make the system particularly suitable for use on the shop floor, where internet access may be limited or non-existent.

In some embodiments, the context information comprises various types of data that provide insight into the operator's environment and the specific situation at hand. For instance, the context information may include the location of the machine operator. This location information may be used to identify the specific machine or component that the operator is working with, allowing the system to tailor its responses to the specific machine or component. In some cases, the system may receive an identification of a specific machine or component directly from the operator or from a connected automation system. This identification information may be used to restrict the search context to information relevant to the identified machine or component.

In some embodiments, the context information may also include current machine status parameters. These parameters may provide real-time information about the state of the machine or component, allowing the system to provide responses that are relevant to the current situation. For example, if a machine is overheating, the system may use this information to provide responses related to cooling the machine or reducing its workload.

In some cases, the context information may include historical machine data. This data may provide information about past issues with the machine or component, allowing the system to provide responses that considers the machine's history. For example, if a machine has a history of overheating, the system may provide responses that address this recurring issue.

In some embodiments, the context information comprises process information. This information may provide insight into the specific process that the operator is performing, allowing the system to provide responses that are relevant to the process. For example, if the operator is performing a milling process, the system may provide responses related to common issues with milling machines or tips for optimizing the milling process.

In a further embodiment, the context-aware machine operator support system retrieves information from both the first and the second vector databases based on the optimized query. This allows the system to combine the information from the domain-specific document chunks and the rated question/answer pairs to generate a comprehensive response to the operator's query. For example, the system uses information from a domain-specific document chunk to provide a detailed explanation of a machine component and use a rated response from a similar query to provide a practical solution to the operator's problem. In this embodiment, the system prioritizes the retrieval of information from one vector database over the other based on the context information. For instance, if the context information indicates that the operator is dealing with a common issue that has been previously addressed, the system may prioritize the retrieval of information from the first vector database, which stores rated question/answer pairs. Conversely, if the context information indicates that the operator is dealing with a unique or complex issue, the system prioritizes the retrieval of information from the second vector database, which stores domain-specific document chunks. This dynamic prioritization allows the system to provide the most relevant and effective support to the operator in different situations.

In a preferred embodiment, the system allows the machine operator to provide additional context information explicitly. This additional context information can be incorporated into the optimized query, further refining the system's responses. The system may also be configured to receive rating or feedback from the machine operator on the generated responses and update the vector databases based on this feedback or rating, allowing the system to continuously improve its performance.

Preferably, the system also automatically retrieves additional context information from connected automation systems. This additional context information can be used to further optimize the query and response generation, providing even more tailored and effective support to the machine operator. This context-aware machine operator support system thus represents a significant advancement in the field of industrial machine operation support.

The large language model may be a standard model, such as LLama-2, or any other suitable model. The large language model may be extended with specific domain knowledge through the use of vector embedding models which turns input text into vectors and are used for vector search in vector databases such as embedding 5 (E5), allowing the system to provide more accurate and relevant responses.

In a preferred embodiment, the users can dynamically add additional add documents to the second vector database or question/answer pairs to the first vector database. This feature may enable users to customize the system with domain-specific knowledge. For example, a user may add a manual for a specific machine, or a document detailing a particular process to the second vector database and once added, these documents may be processed and stored in the second vector database, making the information contained within them available for use in generating responses to operator queries.

In another preferred embodiment, the system updates the first vector database based on the feedback or rating received from the machine operator. For example, after the system generates a response to a query, the machine operator may provide feedback on the effectiveness of the response. This feedback is then used to rate the question/answer pair associated with the response. The rated question/answer pair may then be stored in the first vector database, allowing the system to learn from past interactions and improve its performance over time.

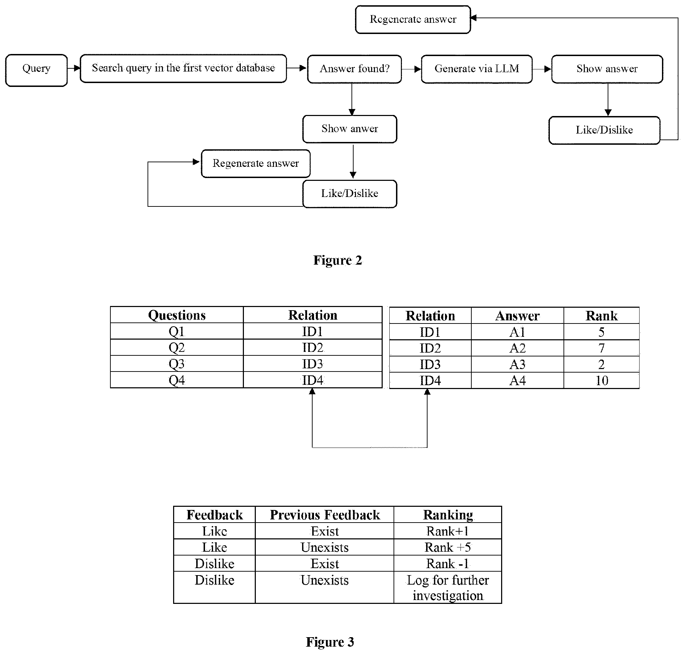

Preferably, referring to Fig. 2 if a similarity search in the first vector database does not provide good results (not accepted by the machine operator or poorly ranked by the machine operator), the machine operator can request a new generation from the system, or the system automatically generates new answers based on the information provided in the domain-specific documents stored in the second vector database. This two-stage approach allows the system to provide effective support to the operator, even in situations where a similar problem has not been encountered before. In this embodiment, the system may use the feedback received from the operator to adjust the weighting of the rated question/answer pairs in the second vector database. For example, if the machine operator rates a response highly, the system may increase the weighting of the associated question/answer pair, making it more likely to be retrieved in future queries. Conversely, if the operator rates a response poorly, the system may decrease the weighting of the associated question/answer pair, making it less likely to be retrieved in future queries. This dynamic weighting mechanism may allow the system to adapt to the operator's preferences and provide more relevant and effective responses over time.

In some embodiments, the context-aware machine operator support system is configured to automatically retrieve additional context information from connected automation systems. This additional context information may include, for example, real-time data about the status of a machine, historical data about the machine's operation, or other relevant data provided by the automation systems. The system may retrieve this additional context information through existing APIs or other suitable interfaces, allowing the system to access a wide range of data from the automation systems. For example, if the additional context information includes real-time data about a machine's temperature, the system uses this data to optimize the query, allowing it to retrieve information related to temperature issues from the vector databases or for example, if the additional context information includes historical data about a machine's operation, the system uses this data to generate a response that takes into account the machine's history. This may result in a response that is more relevant and useful to the operator, helping to solve the operator's problem more effectively. The system may also use historical data from logfiles or time series data to add additional information to the context. This historical data may provide insight into past issues with the machine or component, allowing the system to provide responses that take into account the machine's history. For example, if the historical data shows that a machine has a history of overheating, the system provides responses that address this recurring issue. This use of historical data may allow the system to provide more effective support to the operator, helping to prevent recurring issues and improve the machine's operation.

Referring to Table 1, the system comprises a database which comprises the table of question identifiers and relation identifiers. This table stores the question identifiers and their corresponding relation identifiers. The processor searches in this table for similar rated question-answer pairs upon receipt of a query from the machine operator via the graphical user interface.

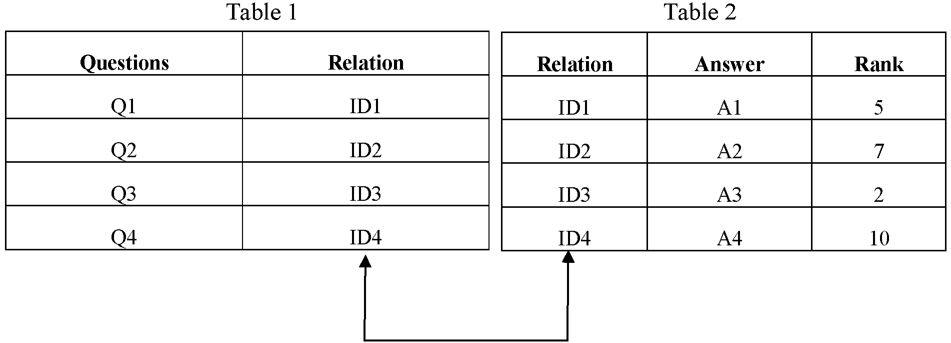

**Table 3**

| **Feedback** | **Previous Feedback** | **Ranking** |
|---|---|---|
| Like | Exist | Rank+1 |
| Like | Unexists | Rank+5 |
| Dislike | Exist | Rank -1 |
| Dislike | Unexists | Log for further investigation |

Preferably, referring to Table 2, the system comprises another table comprising relation identifiers along with their associated answers and numerical rank values. The relation identifiers allow the system to link questions with their corresponding answers and ranks, thereby facilitating the retrieval of relevant responses to operator queries. In this embodiment, the system is configured to update the table based on the received rating from the machine operator. This update may involve adjusting a rating of an existing similar question-answer pair based on the received rating. If the rating exceeds a predetermined threshold, the processor may store the query and the provided answer or generated response as a new rated question-answer pair in the first vector database. This feature allows the system to continuously refine its knowledge base based on operator feedback, thereby improving the relevance and accuracy of future responses.

In a preferred embodiment, referring to Table 3, the system comprises a ruleset table that governs the system's behavior in response to user feedback. The ruleset defines rules for handling user feedback, such as incrementing or decrementing the rank of an existing record based on a "Like" or "Dislike" action from the user. In this embodiment, preferably, the ruleset includes an "extended rating" mechanism that acts as an impact rating, incrementing or decrementing the rating by a higher value (e.g., 5) or a lower value (e.g -1) compared to the standard rating. For instance, if the answer is already ranked before as "like" from one machine operator and another machine operator "dislikes" the answer, the system updates the ranking of this question/answer pair by assigning -1 value to the ranking, or if an answer is not ranked before, and a machine operator is dislikes the answer for the first time, the system logs this question/answer pair for further investigation. This feature may allow the system to dynamically adjust the priority of responses based on operator feedback, thereby enhancing the system's ability to provide timely and relevant responses to operator queries.

Preferably, the context-aware machine operator support system is used in other domains beyond machine operation support. For example, the system may be used in TIA hotline support, where it can use its specific domain knowledge to assist hotline operators in providing support to customers. The context-aware machine operator support system may be implemented in a cloud-based environment. This cloud-based implementation may allow the system to be hosted on a remote server and accessed by the operator through a web browser or other suitable interface. This cloud-based implementation may provide several advantages, such as increased scalability, improved accessibility, and reduced maintenance requirements. For example, by hosting the system in the cloud, it may be possible to easily scale the system to support a large number of operators or machines. Additionally, the operator may be able to access the system from any location with an internet connection, providing increased flexibility and convenience. For example, the system may be capable of leveraging a general cloud-based system, such as ChatGPT, as a fourth level of information retrieval. This feature may come into play when the local resources, such as the rated question-answer pairs in the first vector database and the document chunks in the second vector database, are exhausted. In such cases, the system may reach out to the general cloud-based system to provide more general information or advice in the context of the current query. This feature may provide the system with an additional layer of support, enhancing its ability to provide relevant responses to operator queries.

Present invention also provides a method for providing context-aware support to a machine operator, comprising the steps of:
receiving a query from the machine operator via the graphical user interface,
receiving context information related to a machine operator's environment,
using the context information to restrict a search context and optimize a query for relevant information,
searching the first vector database for similar question/answer pairs, if a similar rated question/answer pair is found, providing the answer to the machine operator via the graphical user interface,
if no similar rated question-answer pair is found, searching the second vector database for relevant document chunks,
generating a response using the large language model based on the relevant document chunks, and providing the generated response to the machine operator via the graphical user interface.

In the method provided with the present invention, a query is received from the machine operator. Once the query is received, the method retrieves the context information related to the machine operator's environment. The context information comprises any of the following: an error code from a specific machine, the location of the machine operator, historical machine data, process information, and/or an identification of a specific machine or component directly from the operator or from a connected automation system. Then, using the context information the search context is restricted and the query is optimized. Firstly, a simple search is conducted in the first vector database where preferably previously rated question/answer pairs are stored. If the query is paired to an answer in the first vector database, the method retrieves the related answer from the first vector database and shows the answer to the machine operator via the graphical user interface. If the answer is not paired in the first vector database, the second vector database is reached and by using a large language model a response is generated to the machine operator's query based on the retrieved information and the context information.

In one embodiment, the method further comprises the step of providing additional context information explicitly from the machine operator.

In a preferred embodiment, the method comprises the step of receiving feedback from the machine operator on the generated responses and updating the vector databases based on this feedback, allowing the method to continuously improve its performance. In another preferred embodiment, the method updates the second vector database based on the feedback received from the machine operator. For example, after the method generates a response to a query, the machine operator may provide feedback on the effectiveness of the response. This feedback is then used to rate the question/answer pair associated with the response. The rated question/answer pair may then be stored in the first vector database, allowing the system to learn from past interactions and improve its performance over time.

Preferably, the method also automatically retrieves additional context information from connected automation systems. This additional context information can be used to further optimize the query and response generation, providing even more tailored and effective support to the machine operator.

In the step of using large language model, the large language model may be extended with specific domain knowledge through the use of vector embedding models which turns input text into vectors and are used for vector search in vector databases such as embedding model 5 (E-5-base-v2), allowing the method to provide more accurate and relevant responses.

Preferably, referring to Fig.2, if a similarity search in the first vector database does not provide good results (not accepted/liked by the machine operator or poorly ranked by the machine operator), the machine operator can request a new generation from the method, or the method automatically generates new answers based on the information provided in the domain-specific documents stored in the second vector database. This two-stage approach allows the method to provide effective support to the operator, even in situations where a similar problem has not been encountered before. In this embodiment, the method may use the feedback or rating received from the operator to adjust the weighting of the rated answer in the second vector database. For example, if the machine operator rates a response highly, the weighting of the associated question/answer pair is increased, making it more likely to be retrieved in future queries. Conversely, if the operator rates a response poorly, the weighting of the associated question/answer pair is decreased, making it less likely to be retrieved in future queries. This dynamic weighting mechanism may allow the method to adapt to the operator's preferences and provide more relevant and effective responses over time.

Referring to Table 1, the method comprises the step of conducting a search in another database including a table where question identifiers and relation identifiers are stored for similar rated question/answer pairs upon receipt of a query from the machine operator via the graphical user interface.

Preferably, referring to Table 2, in another table relation identifiers along with their associated answers and numerical rank values are stored. The relation identifiers allow the method to link questions with their corresponding answers and ranks, thereby facilitating the retrieval of relevant responses to operator queries. In this embodiment, the method updates the table based on the received rating from the machine operator. This update may involve adjusting a rating of an existing similar question/answer pair based on the received rating. If the rating exceeds a predetermined threshold, the processor may store the query and the provided answer or generated response as a new rated question/answer pair in the first vector database. This feature allows the method to continuously refine its knowledge base based on operator feedback, thereby improving the relevance and accuracy of future responses.

In a preferred embodiment, referring to Table. 3, the rules for handling user feedback, such as incrementing or decrementing the rank of an existing record based on a "Like" or "Dislike" action from the user are stored in a ruleset table. In this embodiment, preferably, the ruleset includes an "extended rating" mechanism that acts as an impact rating, incrementing or decrementing the rating by a higher value (e.g., 5) or a lower value (e.g. -1) compared to the standard rating. For instance, if the answer is already ranked before as "like" from one machine operator and another machine operator "dislikes" the answer, the ranking of this question/answer pair is updated by assigning -1 value to the ranking, or if an answer is not ranked before, and a machine operator dislikes the answer for the first time, this question/answer pair is logged for further investigation. This feature may allow the method to dynamically adjust the priority of responses based on operator feedback, thereby enhancing the system's ability to provide timely and relevant responses to operator queries.

In some embodiments, the method automatically retrieves additional context information from connected automation systems. This additional context information may include, for example, real-time data about the status of a machine, historical data about the machine's operation, or other relevant data provided by the automation systems. This additional context information can be obtained through existing APIs or other suitable interfaces. For example, if the additional context information includes real-time data about a machine's temperature, the method uses this data to optimize the query, and retrieves information related to temperature issues from the vector databases or for example, if the additional context information includes historical data about a machine's operation, the method uses this data to generate a response that takes into account the machine's history. The method may also use historical data from logfiles or time series data to add additional information to the context. For example, if the historical data shows that a machine has a history of overheating, the method provides responses that address this recurring issue. This use of historical data may allow the system to provide more effective support to the operator, helping to prevent recurring issues and improve the machine's operation.

Preferably, the method can be implemented in a cloud-based environment. This cloud-based implementation may allow the method to be hosted on a remote server and accessed by the operator through a web browser or other suitable interface. The operator may be able to access the method from any location with an internet connection, providing increased flexibility and convenience.

In another embodiment, the context-aware machine operator support system is implemented as a non-transitory computer-readable storage medium storing instructions. These instructions, when executed by a processor, cause the processor to perform the method for providing context-aware support to a machine operator. The non-transitory computer-readable storage medium includes any suitable type of storage medium, such as a hard drive, a solid-state drive, a flash memory, or other suitable storage medium. The instructions stored on the non-transitory computer-readable storage medium may include instructions for receiving a query from a machine operator, accessing a large language model, accessing vector databases, receiving context information, using the context information to optimize the query, retrieving information from the vector databases, and generating a response to the operator's query. This implementation of the system may provide a flexible and efficient way to provide context-aware support to a machine operator.

The context-aware machine operator support system and method described herein has broad industrial applicability across various manufacturing and production environments. While the examples provided focus on machine operation in industrial settings, the system's adaptable architecture allows for implementation in diverse sectors such as automotive manufacturing, aerospace, chemical processing, food production, and pharmaceuticals. The system's ability to provide real-time, context-aware support can significantly enhance operational efficiency, reduce downtime, and improve safety in any industrial setting where complex machinery is operated. Furthermore, the principles and techniques of this system could be extended to other domains requiring intelligent decision support, such as healthcare diagnostics, financial analysis, or customer service operations. The flexibility of the system's design allows for customization to meet the specific needs of different industries and use cases, making it a versatile tool for improving operational performance and knowledge management across a wide range of industrial applications.

Independent of the grammatical term usage, individuals with male, female or other gender identities are included within the term.

## Claims

1. A context-aware machine operator system to assist machine operators in an industrial setting comprising:
a large language model,
a first vector database for storing question/answer pairs,
a second vector database storing embeddings of domain-specific or a particular machine specific documents chunks and
a graphical user interface for receiving queries from the machine operator and displaying responses,
a processor,
wherein the system is configured to
receive a query from the machine operator via the graphical user interface,
receive context information related to the machine operator's environment,
use the context information to restrict a search context and optimize a query for relevant information,
search the first vector database for similar question/answer pairs, if a similar question-answer pair is found, provide the answer to the machine operator via the graphical user interface,
if no similar question/answer pair is found, search the second vector database for relevant document chunks,
generate a response using the large language model based on the relevant document chunks, and
provide the generated response to the machine operator via the graphical user interface.

2. A system according to Claim 1, **characterized in that** wherein the system is further configured to receive a rating or feedback for the provided answer or generated response from the machine operator via the graphical user interface, and update the first vector database and/or the second vector database based on the received rating or feedback.

3. The system according to Claim 2, wherein the system is configured to update the first vector database by storing the query and the provided answer or generated response as a new rated question/answer pair if the rating exceeds a predetermined threshold or adjusting a rating of an existing similar question/answer pair based on the received rating or feedback.

4. A system according to any of the preceding claims, **characterized in that** the context information comprises an error code from a specific machine, the location of the machine operator, historical machine data, process information, and/or an identification of a specific machine.

5. A system according to any of the preceding claims, **characterized in that** the system is configured to retrieve information from both the first and the second vector databases based on the optimized query simultaneously if no similar answer is found in the first vector database.

6. A system according to any of the preceding claims, **characterized in that** the system is configured to allow the machine operator to provide additional context information explicitly.

7. A system according to any of the preceding claims, **characterized in that** the system is configured to extend the large language model with specific domain knowledge through the use of vector embedding models.

8. A system according to any of the preceding claims, **characterized in that** the system is configured to allow the users dynamically to add additional documents to the second vector database or question/answer pairs to the first vector database.

9. A system according to any of the preceding claims, **characterized in that** the system is configured to receive a request from the machine operator for a new generation, or the system automatically generates new answers based on the information provided in the domain-specific documents stored in the second vector database.

10. A system according to any of the Claims 2 to 9, **characterized in that** the system is configured to use the rating or feedback received from the operator to adjust the weighting of the rated question/answer pairs.

11. A system according to any of the preceding claims **characterized in that** the system is configured to automatically retrieve additional context information from connected automation systems.

12. A system according to any of the preceding claims **characterized in that** the system is configured to be implemented in a cloud-based environment.

13. A system according to any of the preceding claims **characterized in that** the system comprises a database which comprises a table of question identifiers with their associated answers and numerical rank values.

14. A system according to Claim 13 **characterized in that** the system is configured to link questions with their corresponding answers and ranks.

15. A method for providing context-aware support to a machine operator, **characterized by** comprising the steps of:
receiving a query from the machine operator via the graphical user interface,
receiving context information related to a machine operator's environment,
using the context information to restrict a search context and optimize a query for relevant information,
searching the first vector database for similar question/answer pairs, if a similar question/answer pair is found, providing the answer to the machine operator via the graphical user interface,
if no similar question-answer pair is found, searching the second vector database for relevant document chunks,
generating a response using the large language model based on the relevant document chunks, and
providing the generated response to the machine operator via the graphical user interface.
